# EUROPEAN PATENT APPLICATION

(11) **EP 4 075 815 A1**
(43) Date of publication of application: **19.10.2022**
(21) Application number: 20899622.3
(22) Date of filing: 14.12.2020
(51) Int. Cl.: H04N 21/262

(54) **EPG DATA MANAGEMENT METHOD, SERVER, AND READABLE STORAGE MEDIUM**

(30) Priority: 12.12.2019 CN 201911274953
(71) Applicant: ZTE Corporation, Shenzhen, Guangdong 518057 (CN)
(72) Inventor: LI, Rui, Shenzhen, Guangdong 518057 (CN)
(74) Representative: Mozzi, Matteo
(86) International application number: PCT/CN2020/136191
(87) International publication number: WO 2021/115485

(57) **Abstract**

Embodiments of the present invention relate to the technical field of Internet Protocol Television (IPTV) and disclose an Electronic Program Guide (EPG) data management method. The method includes that: a page file of a page file server is mounted locally to an EPG server; an update of the page file of the page file server is monitored by monitoring the page file mounted locally; when the update of the page file of the page file server is monitored, the updated page file is compiled to generate an updated EPG page; and the updated EPG page is stored locally. The embodiments of the present invention also provide an EPG server and a readable storage medium. The EPG data management method, the EPG server and the readable storage medium provided by the embodiments of the present invention can ensure the real-time of EPG display page update and can still provide the latest display page after the failure of the EPG server is removed.

## Description

### Technical Field

The present invention relates to the technical field of Internet Protocol Television (IPTV), and in particular to an Electronic Program Guide (EPG) data management method, a server and a readable storage medium.

### Background

IPTV is a new technology which is over the IP network and provides a variety of interactive services including digital television to home users. An EPG system is a portal system of IPTV services, and its main function is to provide users with a display page in the form of menu, so that the users can select their favorite multicast channels, order their favorite video programs, etc. The index and navigation of various services provided by the IPTV are all realized by the EPG system. With the rapid development of IPTV, the operation of the IPTV services is becoming more normal. An updated display page needs to be released to the EPG system in time according to important events, news and trends, holidays and other information. A user terminal can obtain the updated display page by accessing EPG system.

At present, in an EPG data management method, the display page of a part of EPG systems is updated in a manner that an EPG server side obtains regularly the latest page file from a page file server and updates the display page. The EPG server side queries regularly whether a time stamp of the page file in the page file server is changed. If the time stamp is changed, the page file is updated, and then the EPG server side obtains the page file with the latest time stamp to update the display page. Because this manner is to regularly query the change of the time stamp to update the display page, the real-time performance is poor.

The display page of the other part of EPG systems is updated in a manner that the page file server notifies the EPG server side when the page file is changed, and the EPG server side responds to the notification of the page file server, obtains the latest page file, and updates the display page. This manner can update the display page as soon as the page file is changed, so the real-time performance is good. However, when the page file server notifies the EPG server side, if a certain EPG server is faulty, it will miss the notification from the page file server and cannot learn about the event of page file update of the page file server after the failure is removed, so it cannot provide the users with the latest display page.

In view of this, it is necessary to provide an EPG data management method that can ensure the real-time of EPG display page update and can still provide the latest display page after the failure of the EPG server is removed.

### Summary

Embodiments of the present invention aim to provide an EPG data management method, a server and a readable storage medium, which can ensure the real-time of EPG display page update and can still provide the latest display page after the failure of the EPG server is removed.

To solve the above technical problem, the embodiments of the present invention provide an EPG data management method, which may include the following operations. A page file of a page file server is mounted locally to an EPG server. An update of the page file of the page file server is monitored by monitoring the page file mounted locally. When the update of the page file of the page file server is monitored, the updated page file is compiled to generate an updated EPG page. The updated EPG page is stored locally.

The embodiments of the present invention also provide an EPG server, which may include: at least one processor and a memory in communication connection with the at least one processor. The memory stores an instruction that can be executed by the at least one processor. The instruction is executed by the at least one processor, so that the at least one processor can perform the EPG data management method.

The embodiments of the present invention also provide a computer-readable storage medium, which stores a computer program instruction. When executed by the processor, the computer program implements the EPG data management method.

### Brief Description of the Drawings

One or more embodiments are illustrated through the pictures in the attached drawings corresponding to them, and these illustrative descriptions do not form a limit to the embodiments.
Fig. 1 is a flowchart of an EPG data management method according to the first embodiment of the present invention.
Fig. 2 is a flowchart of an EPG data management method according to the second embodiment of the present invention.
Fig. 3 is a structural schematic diagram of an EPG server according to the third embodiment of the present invention.

### Detailed Description of the Embodiments

In order to make the purpose, technical solutions and advantages of the embodiments of the present invention clearer, the embodiments of the present invention will be described in detail below in combination with the accompanying drawings. However, those of ordinary skill in the art may understand that many technical details are presented in the embodiments of the present invention to make the present invention better understood by the reader. However, the technical solution claimed by the present invention may also be implemented even without these technical details, and changes and modifications based on the following embodiments.

The first embodiment of the present invention relates to an EPG data management method applicable to an EPG server. The core of the present embodiment is that the EPG data management method may include the following steps. A page file of a page file server is mounted locally to an EPG server. An update of the page file of the page file server is monitored by monitoring the page file mounted locally. When the update of the page file of the page file server is monitored, the updated page file is compiled to generate an updated EPG page. The updated EPG page is stored locally.

The EPG server actively monitors the change of the page file of the file server through the page file mounted locally, and the EPG server can monitor the update of the page file immediately and compile the updated page files to generate an updated EPG page, so the real-time of EPG page update can be ensured. In addition, if the EPG server fails to update the EPG page due to a fault during the change of the page file of the file server, the EPG server will mount the page file of the current page file server locally after the failure of the EPG server is removed and the EPG server reestablishes a link with the page file server. Because the latest page file of the page file server is mounted at this time, in the case that the EPG sever is faulty, the EPG server can still provide the latest display page to users after the failure is removed.

Implementation details of the EPG data management method in the present embodiment are specifically described below. The following contents are the implementation details provided only for ease of understanding, and are not necessary for implementing the solution.

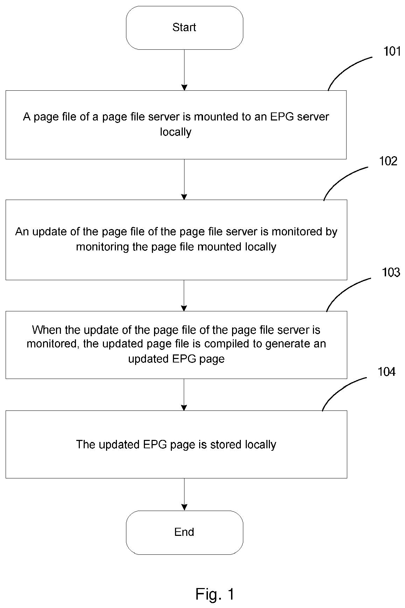

A flowchart of the EPG data management method in the embodiment is shown in Fig. 1, including the following steps.

At S101, a page file of a page file server is mounted to an EPG server locally.

Optionally, in the present embodiment, the EPG server mounts a file of the page file server to a local directory through a Network File System (NFS). In this way, the EPG server can directly access a file directory in the page file server like accessing a local file, and directly access and compile an updated or newly added data file in the page file server to generate an EPG page. Optionally, the EPG server mounts the file directory of the page file server to the local directory through an encrypted network file protocol, so that the EPG server accesses the file on the page file server through the protocol. Optionally, in the present embodiment, the file directory of the page file server may be mounted to the local directory through the nfs protocol or the rpc protocol. It is to be noted that mounting the file directory of the page file server is not limited to the above protocols. In other enforceable embodiments, other network file protocols that support the posix standard may be used to implement the mounting of the file directory of the page file server.

At S102, an update of the page file of the page file server is monitored by monitoring the page file mounted locally.

Optionally, in the present embodiment, the operating system of the EPG server is Linux, and the EPG server monitors the update of the page file of the page file server through inotify. inotify may be used to detect a single file of the page file server, as well as the entire directory of the page file server. In the present embodiment, the EPG server detects the entire directory of the page file server through inotify. When the object to be detected is a directory, both the directory itself and the contents of the directory become the object to be detected. In this mechanism, the EPG server can sense the change of a data file of the page file server immediately. Of course, it is understandable that the present embodiment is not limited to using inotify to monitor the update of the page file of the page file server.

At S103, when the update of the page file of the page file server is monitored, the updated page file is compiled to generate an updated EPG page.

Optionally, the EPG server includes a compiling module, which is configured to compile the EPG display page according to the locally mounted page file of the page file server. After monitoring the update of the page file of the page file server, the EPG server triggers a compiling operation of the compiling module, so as to compile the updated page file to generate an updated EPG page. In this way, it can be ensured that the generated EPG page is the latest EPG page, and the real-time can be ensured.

It is to be noted that, in the page file server, there are other files that the updated page file depends on, so in this step, optionally, the EPG server will also compile the other files that the updated page file depends on.

At S104, the updated EPG page is stored locally.

Optionally, because the updated EPG page is stored into the EPG server locally in this step, when a network between the EPG server and the page file server is faulty, the access of the users to the EPG page is not affected. Optionally, in the present embodiment, the EPG server stores the updated EPG page into a local cache. In this way, the speed of the users accessing to the page can be greatly increased. Optionally, in this step, the EPG server also stores the other pages that the updated EPG page depends on locally/into the local cache.

Compared to the conventional art, in the EPG data management method provided by the embodiments of the present invention, the EPG server actively monitors the change of the page file of the file server through the page file mounted locally, and the EPG server can monitor the update of the page file immediately and compile an updated page files to generate an updated EPG page, so the real-time of EPG page update can be ensured. In addition, if the EPG server fails to update the EPG page due to a fault during the change of the page file of the file server, the EPG server will mount the page file of the current page file server locally after the failure of the EPG server is removed and the EPG server reestablishes a link with the page file server. Because the latest page file of the page file server is mounted at this time, in the case that the EPG sever is faulty, the EPG server can still provide the latest display page to users after the failure is removed.

The second embodiment of the present invention relates to an EPG data management method applicable to an EPG server. The EPG data management method provided by the second embodiment is basically the same as the EPG data management method provided by the first embodiment, and the difference is that on the basis of the first embodiment, the EPG data management method provided by the second embodiment includes additional steps of receiving a content request from the client and returning requested content.

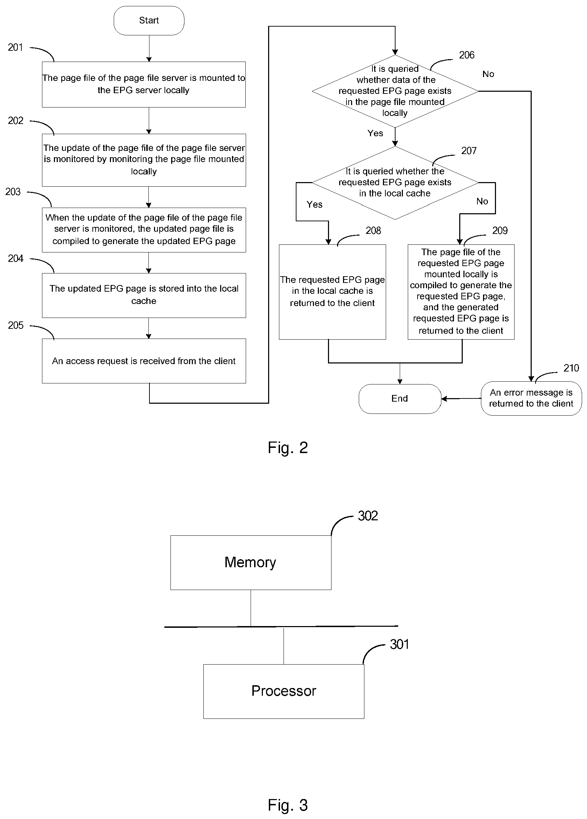

Optionally, a flowchart of the EPG data management method in the embodiment is shown in Fig. 2, including the following steps.

At S201, the page file of the page file server is mounted to the EPG server locally.

At S202, the update of the page file of the page file server is monitored by monitoring the page file mounted locally.

At S203, when the update of the page file of the page file server is monitored, the updated page file is compiled to generate the updated EPG page.

At S204, the updated EPG page is stored into the local cache.

At S205, an access request is received from the client.

At S206, it is queried whether data of the requested EPG page exists in the page file mounted locally; if so, S207 is executed; if not, S210 is executed.

At S207, it is queried whether the requested EPG page exists in the local cache; if so, S208 is executed; if not, S209 is executed.

At S208, the requested EPG page in the local cache is returned to the client, and the process ends.

At S209, the page file of the requested EPG page mounted locally is compiled to generate the requested EPG page, and the generated requested EPG page is returned to the client; the process ends.

At S210, an error message is returned to the client, and the process ends.

S210, S202 and S203 in the present embodiment are the same as S101, S102 and S103 in the first embodiment, and will not be repeated here. In S204 of the present embodiment, the EPG server stores the updated EPG page into the local cache. In this way, the speed of the users accessing to the page can be greatly increased.

After logging in to an EPG system through a Set-Top Box (STB) client, an IPTV user requests the EPG server for obtaining the EPG page by sending the access request. The access request includes an identifier for representing the requested EPG page. In this case, the EPG server executes S205, receives the access request from the STB client, and executes S206 to S210 in response to the access request.

Optionally, in S206, The EPG server queries whether the data of the requested EPG page exists in the page file mounted locally (that is, the page file in the page file server).

If the data of the requested EPG page does not exist in the page file mounted locally, there is no target content required by the IPTV users in the page file server. In this case, S210 is executed, and the EPG server returns the error message to the STB client, and the process ends.

If the data of the requested EPG page exists in the page file mounted locally, there is the target content required by the IPTV users stored in the page file server, and the EPG server can provide the target content required by the IPTV users to the STB client for the users to view. Here, in order to increase the speed of returning the EPG page to the client, S207 for querying may be first executed to query whether the requested EPG page exists in the local cache. In the step of monitoring the update of the page file, only the existing and changed data file in the page file server can be detected, and the new data file that does not originally exist in the page file server cannot be detected, so the EPG pages that are monitored for the update of the page file, recompiled and stored in the local cache of the EPG server do not include new EPG pages. Therefore, after S207 is executed, there is a case that the requested EPG page does not exist in the local cache.

If the requested EPG page exists in the local cache, the EPG server performs S208 to return the requested EPG page in the local cache to the STB client, and the IPTV users obtain the desired EPG page through the STB client and the process ends.

If the requested EPG page does not exist in the local cache, the EPG server executes S209 to compile the locally mounted page file of the requested EPG page to generate the requested EPG page, and returns the generated requested EPG page to the STB client. In this case, when the STB client requests a new EPG page, a page compiling operation of the EPG server may be triggered in response to the request of the STB client. The EPG server compiles the data file of the requested EPG page mounted locally in the page file server to generate the requested EPG page and returns the generated requested EPG page to the STB client.

Optionally, after the generated requested EPG page is returned to the STB client, the generated requested EPG page may also be stored locally. In this case, when the client accesses the newly added EPG page again, the page can be provided directly without further editing. Optionally, in the present embodiment, the generated requested EPG page may be stored in the local cache. In this way, the newly added EPG page accessed by the client is also stored in the local cache to increase the speed of the client accessing the newly added EPG page next time.

Compared with the conventional art, in the present embodiment of the present invention, the EPG server actively monitors the change of the page file of the file server through the page file mounted locally, and the EPG server can monitor the update of the page file immediately and compile an updated page files to generate an updated EPG page, so the real-time of EPG page update can be ensured. In addition, if the EPG server fails to update the EPG page due to a fault during the change of the page file of the file server, the EPG server will mount the page file of the current page file server locally after the failure of the EPG server is removed and the EPG server reestablishes a link with the page file server. Because the latest page file of the page file server is mounted at this time, in the case that the EPG sever is faulty, the EPG server can still provide the latest display page to users after the failure is removed.

The division of steps in the above methods is only for describing clearly. In implementation, these steps may be combined into one step or some steps are split into multiple steps, which falls within the scope of protection of this patent as long as the same logical relationship is included. Adding insignificant modifications or introducing insignificant designs to an algorithm or process without changing the core design of the algorithm or process falls within the scope of protection of this patent.

The third embodiment of the present invention relates to an EPG server. As shown in Fig. 3, the server includes at least one processor 301; and a memory 302 in communication connection with the at least one processor 301. The memory 302 stores an instruction that can be executed by the at least one processor 301. The instruction is executed by the at least one processor 301, so that the at least one processor 301 can execute the EPG data management method in the first embodiment or the second embodiment.

The memory 302 and the processor 301 are connected by a bus. The bus may include any number of interconnected buses and bridges. The bus connects circuits of one or more processors 301 and memories 302 together. The bus can also connect various other circuits together, such as peripheral devices, voltage regulators, and power management circuits, which are well known in the field and therefore are not described further here. A bus interface is provided as an interface between the bus and a transceiver. The transceiver may be a single element or multiple elements, for example, multiple receivers and transmitters, which provide a unit for communicating with a variety of other devices on a transmission medium. The data processed by the processor 301 is transmitted on a wireless medium via an antenna. Optionally, the antenna also receives the data and transmits it to the processor 301.

The processor 301 takes charge of managing the bus and general processing, and can also provide a variety of functions, including timing, peripheral interface, voltage regulation, power management, and other control functions. The memory 302 can be used for storing the data used by the processor 301 to perform operations.

The fourth embodiment of the present invention also provides a computer-readable storage medium, which stores a computer program instruction. When executed by the processor, the computer program implements the EPG data management method in the first embodiment or the second embodiment.

Those skilled in the art can understand that all or part of the steps in the above method embodiment can be completed by relevant hardware instructed through a program, and the program is stored in a storage medium and includes a number of instructions to make a device (which may be a single chip microcomputer, a chip, etc.) or a processor perform all or part of the steps of the method in each embodiment of the present invention. The storage media include, but not limited to, a USB flash disk, a mobile hard disk, a Read-Only Memory (ROM), a Random Access Memory (RAM), a magnetic disk or a compact disc, and other media capable of storing the program codes.

Those of ordinary skill in the art may understand that the above embodiments are the specific embodiments for implementing the present invention. In practical inventions, various modifications may be made for them in form and detail without departing from the spirit and scope of the present invention.

## Claims

1. A method for managing Electronic Program Guide, EPG, data , comprising:
mounting a page file of a page file server to an EPG server locally;
monitoring an update of the page file of the page file server by monitoring the page file mounted locally;
when the update of the page file of the page file server is monitored, compiling the updated page file to generate an updated EPG page; and
storing the updated EPG page locally.

2. The method according to claim 1, wherein storing the updated EPG page locally comprises: storing the updated EPG page into a local cache.

3. The method according to claim 2, further comprising:
receiving an access request from a client, the access request comprising an identifier representing a requested EPG page;
when data of the requested EPG page exists in the page file mounted locally, querying whether the requested EPG page exists in the local cache;
if the requested EPG page exists in the local cache, returning the requested EPG page in the local cache to the client;
if the requested EPG page does not exist in the local cache , compiling the page file of the requested EPG page mounted locally, generating the requested EPG page, and returning the generated requested EPG page to the client.

4. The method according to claim 3, wherein after returning the generated requested EPG page to the client, further comprising:
storing the generated requested EPG page locally.

5. The method according to claim 4, wherein storing the generated requested EPG page locally comprises:
storing the generated requested EPG page into the local cache.

6. The method according to claim 3, wherein after receiving the access request from the client, further comprising:
querying whether the data of the requested EPG page exists in the page file mounted locally;
if the data of the requested EPG page exists in the page file, querying whether the requested EPG page exists in the local cache;
if the data of the requested EPG page does not exist in the page file, returning an error message to the client.

7. The method according to claim 1, wherein mounting the page file of the page file server to the EPG server locally further comprises:
mounting the page file of the page file server to the EPG server locally through a Network File System ,NFS.

8. The method according to claim 1, wherein monitoring the update of the page file of the page file server specifically comprises:
monitoring the update of the service page file of the page file server through inotify.

9. An Electronic Program Guide, EPG server, comprising:
at least one processor; and
a memory in communication connection with the at least one processor; wherein,
an instruction stored in the memory, and the instruction can be executed by the at least one processor, so that the at least one processor can perform the method for managing EPG data as claimed in any one of claims 1 to 8.

10. A computer-readable storage medium, storing a computer program, wherein when executed by a processor, the computer program implements the method for managing EPG data as claimed in any one of claims 1 to 8.
